# EUROPEAN PATENT SPECIFICATION

(11) **EP 2 098 696 B1**
(45) Date of publication and mention of the grant of the patent: **20.11.2013**
(21) Application number: 08102332.7
(22) Date of filing: 06.03.2008
(51) Int. Cl.: F01N 13/18

(54) **Exhaust heat recuperation system**
Abgaswärme-Rückgewinnungssystem
Système de récupération de chaleur d'échappement

(43) Date of publication of application: 09.09.2009
(73) Proprietor: FPT Motorenforschung AG, 9320 Arbon (CH)
(72) Inventor: Gstrein, Wolfgang, 9320, Arbon (CH)
(74) Representative: Borsano, Corrado

(56) References cited:
- EP-A- 1 243 758
- EP-A- 1 567 753
- DE-A1- 10 259 702
- DE-A1-102004 052 106
- FR-A- 2 884 556
- GB-A- 413 967
- US-A1- 2002 038 542

## Description

The present invention concerns an exhaust heat recuperation system.

As it is known, in the field of internal combustion engine increasingly stricter limits on polluting emissions have required the adoption of systems for the reduction of the emissions. Different catalytic systems for the reduction of gaseous pollutants such as carbon monoxide, unburnt compounds, nitrous oxides; for instance, in the diesel engine field, particularly for industrial vehicles, catalytic systems known as SCR (Selective Catalytic Reduction) have been proposed; these systems can reduce nitrous oxides with the use of ammonia resulting from a specially fed urea solution.

Other catalysts such as oxidation catalysts can be used alone or in combination with such systems. Furthermore, traps for different types of particulate are frequently used. An exhaust gas current purifies these systems.

A common feature of these systems lies in the need to operate in a specific temperature range. Catalytic systems are ineffective below a given temperature, whereas excessively high temperatures may damage the catalyst irreversibly: for example, SCR systems are active above 200 °C and can be damaged by temperatures exceeding 560-600 °C. Particulate traps also have, depending on the type used, maximum operating temperatures. Furthermore, their reprocessing, by combustion of the trapped particulate, may occur only with adequate temperatures.

Moreover, the need to not exceed certain exhaust gas temperatures may result in power limitations resulting from the engine in fully loaded operating conditions.

In view of the above, the internal combustion engines, especially the Diesel engines for industrial vehicles, are provided with heat recuperation system on order to increase the efficiency of the engine, recovering energy from the exhaust gas, and in order to control the temperatures of the SCR systems by means of specially designed heat exchangers.

A main drawback of the known exhaust heat recuperation is the backpressure loss caused by different components thereof.

Another drawback is the problematic control of the catalyst operating temperature.

FR 2884 556 A1 discloses an exhaust heat recuperation device having a second catalytically coated heat exchanger downstream of an exhaust gas treatment system for generating steam and a first catalytically coated heat exchanger upstream of the exhaust treatment system for overheating the steam generated by the second heat exchanger.

The aim of the present invention is to eliminate or reduce the drawbacks afflicting the known exhaust heat recuperation system.

Within this aim, it is an object of the present invention to provide an exhaust heat recuperation system with an improved efficiency.

This aim, and these objects of the present invention are achieved by an exhaust heat recuperation system according to claim 1.

Advantageously, the catalytic coating is provided on the heat transfer surfaces and turbulence generators on the exhaust gas side of the heat exchangers.

Further advantages of the present invention will become more clear from the following detailed description of a preferred but not exclusive embodiment and the drawings that are attached hereto, which are merely illustrative and not limitative of the present invention, in which:

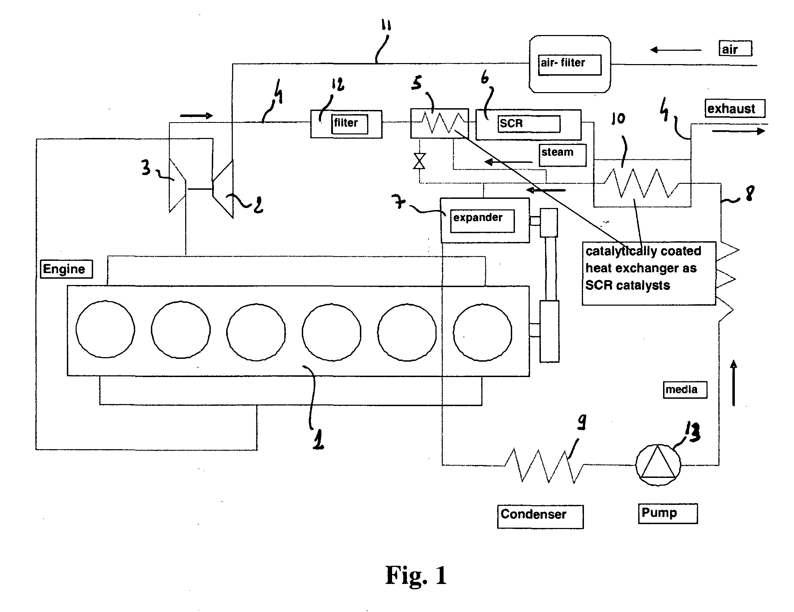

figure 1 schematically represents a scheme of an exhaust heat recuperation system according to the present invention.

With reference to figure 1, the diagram of an engine apparatus comprising an exhaust heat recuperation system according to the present invention is shown.

It may refer to a common combustion engine, e.g. a Diesel engine, suitable for motor propulsion, particularly for industrial vehicles. The engine, according to a possible embodiment, may be supercharged by means of a supercharging unit comprising a turbocompressor 2, located on the suction line 11 and operated by the turbine 3 located on the exhaust gas line 4.

On the exhaust gas line 4, there is an exhaust gas treatment system 6, which may be of the known type; it can be a catalytic system (SCR) able to reduce pollutants present in exhaust gases resulting from the engine, e.g. by reaction with constituents present in the exhaust gases thereof, such as unburnt oxygen, or others specially fed, such as ammonia, or in another known manner.

The treatment system may also comprise a particulate trap 12 or comprise several different devices.

Gases resulting from the engine 1 flow through the line 4 and go through the exhaust gas treatment system 6.

The heat recuperator 10 is located downstream of the treatment system; the recuperator is a heat exchanger, where heat is transferred to a fluid; it is a steam generator in which the heat transferred from the gases is used to generate steam from the water circulating in a special circuit 8.

The circuit 8 is part of the exhaust heat recuperation circuit and in particular it is an energy recuperation circuit. In fact, the steam generated can be used to operate the steam engine 7 or expander. Said engine can be used for different purposes, e.g. to provide the internal combustion engine 1 with torque.

The water circuit 8 for the steam engine may comprise other elements necessary for its operation such as the pump 12 and the condenser 9, which can be cooled with air or water in an known manner.

According to the invention, the method consists in cooling the exhaust gases before going into the system 6 when the engine operating conditions determine an excessively high temperature of the exhaust gases. To this end, the first heat exchanger 5 is required. It is placed on the exhaust line 4, between the engine 1 and the system 6, and can be used to transfer heat to the water (even in the state of steam) of the circuit 8, to overheat the steam produced in the second heat exchanger 10.

The heat of the exhaust gases leaving the treatment system 6 is recovered in the second heat exchanger 10.

Instead of water, another appropriate vaporisable liquid can be used in the circuit 8, but water is to be preferred.

The first 5 and the second 10 heat exchangers are coated with a catalytic material thus increasing thermal efficiency by means of a reduction of the catalysts volume and/or flow resistance.

For example, the first heat exchanger 5 provided on the exhaust gas line 4 can be catalytically coated in addition to the existing SCR-catalyst of the exhaust gas treatment system 6, or it could substitute completely the SCR-catalyst.

The heat exchanger could be coated with SCR catalyst, that could be either Cu or Fe-based materials (zeolites), or vanadium or rare earth element-based materials or precious metals.

Moreover, the first heat exchanger 5 located upstream the SCR catalyst system 6 could be used as an hydrolysis catalyst to convert the injected reagent, which could be Urea, into Ammonia.

Not part of the invention, when the first heat exchanger 5 is located downstream the SCR catalyst system 6, it could be for example an oxidation catalyst used to convert substances eventually not completely treated by the SCR system 6. In this case, a catalyst containing Platinum or other precious metals could be particularly suitable to oxidize excessive NH₃ to Nitrogen.

An important advantage of the exhaust heat recuperation system according to the present invention is the possibility to adjust the optimal catalyst operating temperature by the exhaust heat recuperation circuit.

It has been shown that the present invention achieves the aim and the objects proposed.

More in detail, it has been shown that the exhaust heat recuperation system according to the present invention allows to reduce the exhaust backpressure caused by different components of the known systems. In fact, the presence of catalytically coated heat exchangers allows to optimize the efficiency of the SCR system when such a system is provided, or otherwise it can completely substitute the SCR system.

Another object achieved by the exhaust heat recuperation system according to the present invention is the possibility to adjust the optimal catalyst operating temperature by the means of control the flow rate in the energy recuperation circuit 8.

## Claims

1. Exhaust heat recuperation system particularly for an internal combustion engine (1), the system comprising:
- at least one heat exchanger (5, 10), said at least one heat exchanger (5, 10) being provided with a catalytic coating;
- an exhaust gas line (4) comprising an exhaust gas treatment system (6) and an energy recuperation circuit (8),
- a first catalytically coated heat exchanger (5) being provided on said exhaust gas line (4), and a second catalytically coated heat exchanger (10) being provided on said energy recuperation circuit and connected downstream said exhaust gas treatment system (6), **characterized in that** said first catalytically coated heat exchanger (5) is connected to said energy recuperation circuit (8), said system comprising means to control the flow rate in the recuperation circuit circuit (8), said system produced in said catalytically coated rate in the recuperation circuit (8) to overheat a steam produced in said catalytically coated second heat exchanger (10), so that the exhaust gases are cooled before going into the exhaust gas treatment apparatus, when the engine operating conditions determine an excessively high temperature of the exhaust gases.

2. Exhaust heat recuperation system according to claim 1, **characterized in that** said catalytic coating is provided on the heat transfer surfaces and turbulence generators on the exhaust side of said heat exchanger.

3. Exhaust heat recuperation system according to claim 1, **characterized in that** said at least one heat exchanger is coated with a SCR catalyst.

4. Exhaust heat recuperation system according to claim 3, **characterized in that** said SCR catalyst is a Cu-based material.

5. Exhaust heat recuperation system according to claim 3, **characterized in that** said SCR catalyst is a Fe-based material.

6. Exhaust heat recuperation system according to claim 3, **characterized in that** said SCR catalyst is a Vanadium-based material.

7. Exhaust heat recuperation system according to claim 3, **characterized in that** said SCR catalyst is a rare earth-based material.

8. Exhaust heat recuperation system according to claim 1, **characterized in that** said first catalytically coated heat exchanger (5) is coated with an hydrolysis catalyst suitable to convert the injected reagent such as Urea into Ammonia.

9. Internal combustion engine **characterized in that** it comprises an exhaust heat recuperation system according to one or more of the preceding claims.

10. Vehicle comprising an exhaust heat recuperation system according to one or more of the preceding claims.

## Patentansprüche

1. Abgaswärme-Rückgewinnungssystem insbesondere für einen Verbrennungsmotor (1), wobei das System aufweist:
- mindestens einen Wärmetauscher (5, 10) mit einer katalytischen Beschichtung;
- eine Abgas-Abführleitung (4) mit einem Abgas-Behandlungssystem (6) und einem Energie-Rückgewinnungskreislauf (8);
- einen in der Abgas-Abführleitung (4) angeordneten ersten katalytisch beschichteten Wärmetauscher (5), und einen in dem EnergieRückgewinnungskreislauf (8) angeordneten zweiten katalytisch beschichteten Wärmetauscher (10), der stromabwärts vom Abgas-Behandlungssystem (6) angeschlossen ist,
**dadurch gekennzeichnet,**
**dass** der erste katalytisch beschichteten Wärmetauscher (5) mit dem EnergieRückgewinnungskreislauf (8) verbunden ist, das System Mittel zum Steuern der Durchflussrate im Energie-Rückgewinnungskreislauf (8) aufweist um den im zweiten katalytisch beschichteten Wärmetauscher (10) erzeugten Dampf zu überhitzen, derart dass die Abgase gekühlt werden, bevor sie in das AbgasBehandlungssystem (6) eintreten, wenn die Motorbetriebsbedingungen eine exzessiv hohe Temperatur der Abgase determinieren.

2. Abgaswärme-Rückgewinnungssystem nach Anspruch 1, **dadurch gekennzeichnet, dass** die katalytische Beschichtung auf den Wärmeübertragungsoberflächen und Turbulenzerzeugern an der Auslass-Seite des Wärmetauschers (5, 10) aufgebracht ist.

3. Abgaswärme-Rückgewinnungssystem nach Anspruch 1, **dadurch gekennzeichnet, dass** der zumindest eine Wärmetauscher (5, 10) mit einem SCR-Katalysator beschichtet ist.

4. Abgaswärme-Rückgewinnungssystem nach Anspruch 3, **dadurch gekennzeichnet, dass** der SCR-Katalysator ein Cu-basiertes Material ist.

5. Abgaswärme-Rückgewinnungssystem nach Anspruch 3, **dadurch gekennzeichnet, dass** der SCR-Katalysator ein Fe-basiertes Material ist.

6. Abgaswärme-Rückgewinnungssystem nach Anspruch 3, **dadurch gekennzeichnet, dass** der SCR-Katalysator ein Vanadium-basiertes Material ist.

7. Abgaswärme-Rückgewinnungssystem nach Anspruch 3, **dadurch gekennzeichnet, dass** der SCR-Katalysator ein Seltene-Erden-basiertes Material ist.

8. Abgaswärme-Rückgewinnungssystem nach Anspruch 1, **dadurch gekennzeichnet, dass** der erste katalytisch beschichteten Wärmetauscher (5) mit einem HydrolyseKatalysator beschichtet ist, der geeignet ist, ein eingespritztes Reagenz, wie Urea, in Ammoniak umzuwandeln.

9. Verbrennungsmotor, **dadurch gekennzeichnet, dass** er ein Abgaswärme-Rückgewinnungssystem nach einem oder mehreren der voranstehenden Ansprüche aufweist.

10. Kraftfahrzeug mit einem Abgaswärme-Rückgewinnungssystem nach einem oder mehreren der voranstehenden Ansprüche.

## Revendications

1. Système de récupération de chaleur d'échappement particulièrement pour un moteur à combustion interne (1), le système comprenant :
- au moins un échangeur de chaleur (5, 10), ledit au moins un échangeur de chaleur (5, 10) étant pourvu d'un revêtement catalytique ;
- une conduite de gaz d'échappement (4) comprenant un système de traitement de gaz d'échappement (6) et un circuit de récupération d'énergie (8),
- un premier échangeur de chaleur revêtu de façon catalytique (5) prévu sur ladite conduite de gaz d'échappement (4), et un second échangeur de chaleur revêtu de façon catalytique (10) prévu sur ledit circuit de récupération d'énergie et raccordé en aval dudit système de traitement de gaz d'échappement (6), **caractérisé en ce que** ledit premier échangeur de chaleur revêtu de façon catalytique (5) est raccordé audit circuit de récupération d'énergie (8), ledit système comprenant des moyens pour réguler le débit dans le circuit de récupération (8) pour surchauffer une vapeur produite dans ledit second échangeur de chaleur revêtu de façon catalytique (10), pour que les gaz d'échappement soient refroidis avant d'aller dans l'appareil de traitement de gaz d'échappement, lorsque les conditions de fonctionnement de moteur déterminent une température excessivement élevée des gaz d'échappement.

2. Système de récupération de chaleur d'échappement selon la revendication 1, **caractérisé en ce que** ledit revêtement catalytique est prévu sur les surfaces de transfert de chaleur et des générateurs de turbulence sur le côté échappement dudit échangeur de chaleur.

3. Système de récupération de chaleur d'échappement selon la revendication 1, **caractérisé en ce que** ledit au moins un échangeur de chaleur est revêtu avec un catalyseur SCR.

4. Système de récupération de chaleur d'échappement selon la revendication 3, **caractérisé en ce que** ledit catalyseur SCR est un matériau à base de Cu.

5. Système de récupération de chaleur d'échappement selon la revendication 3, **caractérisé en ce que** ledit catalyseur SCR est un matériau à base de Fe.

6. Système de récupération de chaleur d'échappement selon la revendication 3, **caractérisé en ce que** ledit catalyseur SCR est un matériau à base de vanadium.

7. Système de récupération de chaleur d'échappement selon la revendication 3, **caractérisé en ce que** ledit catalyseur SCR est un matériau à base de terres rares.

8. Système de récupération de chaleur d'échappement selon la revendication 1, **caractérisé en ce que** ledit premier échangeur de chaleur revêtu de façon catalytique (5) est revêtu avec un catalyseur hydrolytique approprié pour convertir le réactif injecté, tel que de l'urée en ammoniac.

9. Moteur à combustion interne, **caractérisé en ce qu'**il comprend un système de récupération de chaleur d'échappement selon une ou plusieurs des revendications précédentes.

10. Véhicule comprenant un système de récupération de chaleur d'échappement selon une ou plusieurs des revendications précédentes.
